# EUROPEAN PATENT SPECIFICATION

(11) **EP 1 416 183 B1**
(45) Date of publication and mention of the grant of the patent: **18.10.2006**
(21) Application number: 03256917.0
(22) Date of filing: 31.10.2003
(51) Int. Cl.: F16D 65/12

(54) **A rotor with surface having a plurality of indentations formed therein**
Rotor mit einer Oberfläche mit einer Vielzahl von Vertiefungen
Rotor avec une surface comportant plusieurs encoches

(30) Priority: 01.11.2002 US 422855 P; 08.01.2003 US 337974
(43) Date of publication of application: 06.05.2004
(73) Proprietor: Performance Friction Corporation, Clover, SC 29710 (US)
(72) Inventor: Burgoon, Donald L., Gastonia North Carolina 28054 (US); Qian, Wenqi, Fort Mill South Carolina 29708 (US)
(74) Representative: Laight, Martin Harvey

(56) References cited:
- EP-A- 0 670 434
- EP-A- 1 063 442
- US-A- 3 809 192
- US-B1- 6 279 697
- PATENT ABSTRACTS OF JAPAN vol. 1997, no. 07, 31 July 1997 (1997-07-31) -& JP 09 072358 A (AISIN TAKAOKA LTD), 18 March 1997 (1997-03-18)
- PATENT ABSTRACTS OF JAPAN vol. 0160, no. 57 (M-1210), 13 February 1992 (1992-02-13) & JP 03 255233 A (ENDLESS PROJECT:KK), 14 November 1991 (1991-11-14)

## Description

The invention relates to rotors, especially but not exclusively to brake rotors used in road vehicles.

Conventional brake assemblies include a brake rotor with a brake pad contact surface for contact with brake pads associated with a vehicle wheel to effect braking. The brake pad contact surface can be an annular ring that engages with the brake pad, which is typically a high friction material, to stop rotation of the brake rotor, which is connected to a hub of a wheel assembly.

Rotors used in road vehicles typically have a smooth brake pad contact surface. During operation, the brake pad is pressed against the rotor surface to stop rotation of the wheel hub, which supports the rotor. Some prior art rotors have been designed to increase friction by modifying the surface of the rotor to provide some texture.

However, increased friction causes additional heat to be generated across the brake pad contact surface of the rotor during braking. Heat generation, particularly with increased friction, results in an uneven thermal gradient, thermal distortion of the brake pad contact surface and heat stress that deteriorates the rotor disk. Such heat effects can result in increased replacement and maintenance costs for brake rotor assemblies.

One way to increase friction is to provide through holes in the braking surface. Such holes, while increasing friction, create stress concentrations in the rotor surface, which leads to cracking. Cracked rotors require replacement, which can be costly, especially for road vehicles. Additionally, manufacturing rotors with through holes requires lengthy machining time and tool wear.

Another way to increase friction is to provide elongated grooves in the braking surface. This is shown in US-B-6446770. The rotor of US-B-6446770 has a pattern of elongated shallow grooves arrayed across the braking surface that provides an excellent braking surface, which is particularly effective for more aggressive friction material in high performance applications.

With the increased friction, the braking surface also experiences increased heat. Some rotors are designed to accommodate increased heat by providing ventilation channels. This type of brake rotor, typically called a ventilated rotor, includes a pair of brake pad contact surfaces spaced from each other, generally by a plurality of spaced vanes or ribs. The vanes or ribs allow air to circulate under the brake pad contact surface for cooling.

However, ventilation alone does not remedy problems associated with non-uniform heat distribution across the brake pad contact surface that can create thermal distortion and frictional instability. Ventilated brake rotors have uneven temperature gradients over their brake pad contact surfaces. This is due to the heat sink capability of the vanes underneath the brake pad contact surfaces. Heat generated on the brake pad contact surfaces on the areas that overlap a vane is directly transferred to the corresponding vane. Heat generated during braking on the brake pad contact surfaces on the areas between vanes is not directly transferred to a vane. Accordingly, the temperature of the brake pad contact surfaces in the areas between vanes is higher than in the areas that overlap a vane. This non-uniform temperature gradient contributes to thermal distortion on the rotor brake pad contact surfaces. The thermal distortion results in non-uniform contact between brake pads and the brake pad contact surfaces which further increases the thermal gradient, causes premature rotor and pad wear, and increases thermal judder and vibration. Thermal distortion further results in thermal checking in the rotor and decreased rotor life.

Another problem with friction surface texture is increased noise generated during braking. While texture increases friction, it also creates a disturbance between the brake pad and rotor surface. This disturbance can create noise, which can become an issue in the final vehicle design.

For example, the rotors described in U.S. Patent 6,446,770, discussed above, tend to generate high noise levels during braking. While high noise levels are acceptable in racing situations, it is preferable to have minimal noise levels during braking in typical vehicle road use.

JP-A-09/072358 discloses a ventilated disk having an outer disk, an inner disk and ribs therebetween, in which the accumulation of heat to the thick parts of the disk, corresponding to the location of the ribs, is reduced by providing recesses on the braking surface of the disk positioned above ribs.

EP-A-1063442 discloses a braking disk having recesses on both sides of the disk in various patterns. In some cases the recesses on each side are aligned to form an aperture through the disk.

JP-A-03/255233 discloses a disk rotor having recessed slots on the braking surface.

US-B-6279697 discloses a brake disk rotor having dimpled recesses in both sides of the disk rotor that are non-directional and essentially positioned randomly on the braking surface.

EP-A-0670434 discloses a brake disk rotor having recesses of various shapes and profiles.

US-A-3809192 discloses a brake disk having recesses extending partially or completely into the braking surface of the disk, arranged in a uniform pattern along a dividing line or alternatively along a zig-zag.

Thus, there is a need for a brake rotor that has an improved friction surface while accommodating increased heating and noise generation that can occur with increased friction. There is also a need for a brake rotor that is durable and economical.

According to the present invention, there is provided a rotor comprising: a disk having a thickness and at least one brake pad contact surface bounded by an inner circumference and an outer circumference, the at least one brake pad contact surface including a plurality of indentations formed therein in an area between the inner circumference and the outer circumference, wherein the indentations are concave dimples having a depth less than the thickness of the disk and are arranged in a repeating pattern; and an attachment portion extending from the disk for attachment to a wheel wherein the repeating pattern of indentations is formed of a plurality of groups of indentations extending generally in the same direction between the inner circumference and the outer circumference, wherein each group of indentations is formed of aligned indentations with the indentation closest to the inner circumference and the indentation closest to the outer circumference and any indentations aligned therebetween defining the group; characterised in that each entire group of indentations is radially and circumferentially offset from an entire adjacent group such that the outermost indentation of an entire first group of indentations located closer to the inner circumference, is positioned closer to the inner circumference than the innermost indentation of an entire adjacent second group of indentations located closer to the outer circumference.

An embodiment of the present invention provides a rotor with a brake pad contact surface that offers enhanced braking power and performance. The surface can increase friction and stopping power while maintaining frictional stability throughout the braking application.

An embodiment of the present invention provides a rotor with a brake pad contact surface that reduces the non-uniform temperature distribution (thermal gradient) across the brake pad contact surface during automobile braking. Accordingly, thermal distortion and the numerous problems associated with thermal distortion is minimized.

An embodiment of the present invention provides a rotor with a brake pad contact surface that performs with reduced vibration and thermal judder during braking, especially due to the decreased thermal distortion. Accordingly, a decrease in thermal distortion contributes to smooth braking.

An embodiment of the present invention reduces machining time and tool wear compared to conventional rotors with through holes.

An embodiment of the present invention provides a rotor with a brake pad contact surface in which the thermal gradient across the surface is reduced, resulting in decreased thermal checking and an increase in rotor life.

An embodiment of the present invention provides a rotor in which uniform contact is promoted between the rotor and brake pads. Non-uniform contact typically results from thermal distortion. Uniform contact can result in a decrease of taper and radial wear on the pads and an increase in pad life. Uniform contact also can decrease uneven wear. Uniform contact also minimizes undesirable frictional variability between the pads and the brake pad contact surface.

An embodiment of the present invention provides an indentation at each position across the radius of the braking surface so as to thoroughly swipe the braking surface, if desired, and minimize friction material build up on the braking surface.

An embodiment of the present invention provides a noise characteristic so that during operation the friction enhanced surface of the rotor does not create more noise than a smooth disk would create when the brake pad is applied.

A rotor in accordance with the present invention has a plurality of indentations formed in a brake pad contact surface thereof. The indentations can be formed in a pattern. The various design possibilities and optimal design for each particular braking application can be established using finite element analysis based on computer simulations. Goals of the ultimate design can include increasing friction between brake pads and the brake pad contact surface, decreasing the thermal gradient and thus decreasing thermal distortion on the rotor, and decreasing noise generation.

Embodiments of the present invention will now be described by way of example with reference to the accompanying drawings, in which:
FIG. 1 is a front view of an example of a brake rotor;
FIG. 2 is an enlarged view of section A taken from the brake rotor of FIG. 1;
FIG. 3 is an enlarged cross sectional side view of the brake rotor of FIG. 1;
FIG. 3A is enlarged view of section B from FIG. 3 showing the indentations in detail;
FIG. 4 is a front view of another example of a brake rotor;
FIG. 5 is an enlarged view of section C taken from the brake rotor of FIG. 4;
FIG. 6 is a front view of another example of a brake rotor;
FIG. 7 is a front view of another example of a brake rotor;
FIG. 8 is an enlarged partial view of an example of a brake rotor in accordance with an embodiment of the invention;
FIG. 8A is an enlarged partial view of an example of a brake rotor in accordance with a modification of the embodiment of FIG. 8;
FIG. 9 is an enlarged partial view of an example of a brake rotor in accordance with an additional embodiment of the invention;
FIG. 10 is an enlarged partial view of an example of a brake rotor in accordance with another embodiment of the invention;
FIG. 11 is a front view of an example of a brake rotor with an integrated hub in accordance with another embodiment of the invention;
FIG. 13 is a front view of an example of a brake rotor in accordance with another embodiment of the invention;
FIG. 14 is a front view of an example of a brake rotor connected to a hub assembly;
FIG. 14A is a side view in cross section of the assembly of FIG. 14 taken along line XIV-XIV;
FIG. 15 is a front view of an example of a brake rotor in accordance with another embodiment of the invention; and
FIG. 15A is an enlarged view of section D of FIG. 15.

Preferably, the brake rotor described herein is designed for road use for automobiles or other vehicles. However, this application is merely exemplary, and it is not intended that the invention be limited to such applications or vehicles. It is also contemplated that the brake rotor described herein could also be used in high performance applications, such as for racing vehicles or heavy duty trucks.

The specific types of brake rotors described herein are intended to be representative of various types of known rotor configurations. For example, the rotor can be a hatless rotor configuration, an integral hat rotor configuration, or an integral hat and hub rotor configuration.

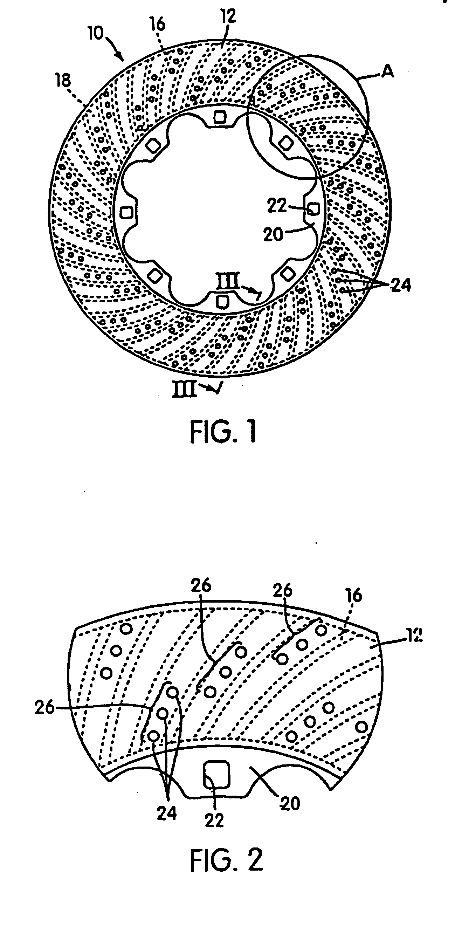

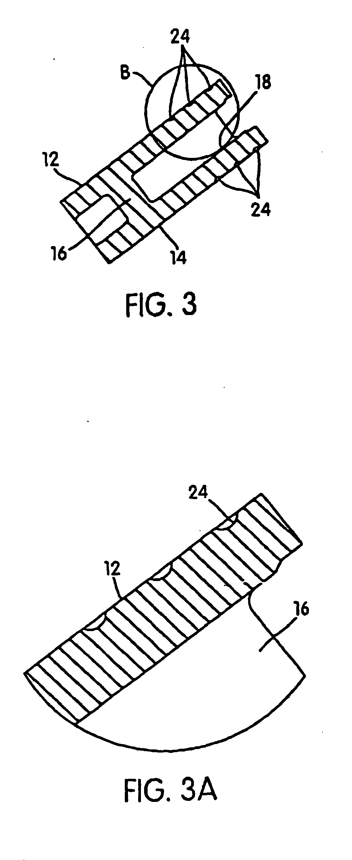

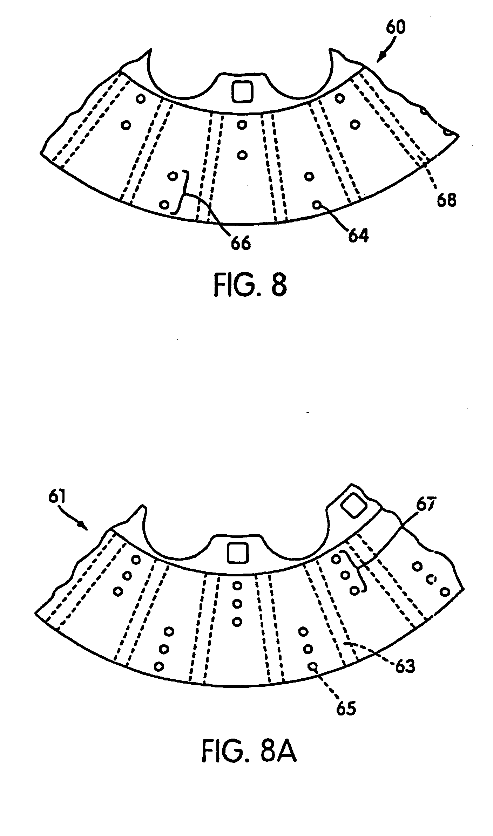

The brake rotor 10 of FIG. 1 is a ventilated rotor having a first braking surface 12 and a second braking surface 14 (seen in FIG. 3) opposed to the first surface 12. The first and second surfaces 12, 14 are preferably formed in an annular ring shape and may have a treated surface designed for braking. A series of vanes 16, shown in phantom in FIG. 1, extend between the first surface 12 and the second surface 14 to space the surfaces and provide ventilation passages 18. The vanes 16 are circumferentially spaced between the first and second braking surfaces 12, 14. Vanes 16 may be spaced in any desired configuration, and any number may be used depending on the particular design considerations. Preferably, the vanes 16 are spaced at regular intervals, as is shown in FIG. 1. The vanes 16 are shown curved in FIG. 1. However, ventilation vanes may also be straight, as seen in FIG. 8 for example, if desired.

The brake rotor 10 is designed for attachment to a wheel hub on a vehicle. An attachment flange 20 extends inwardly from each surface 12, 14 for attachment to the wheel hub. The attachment flange 20 may be a series of tabs, as seen in FIG. 1, or an annular flange. The attachment flange 20 has a series of spaced apertures 22 to receive fasteners for securing the wheel hub.

In use, the brake rotor 10 rotates with the wheel and wheel hub. A brake pad or a pair of brake pads, preferably mounted on a brake caliper, are mounted to move toward the surface of the brake rotor 10 to engage the brake rotor 10 and stop rotation of the wheel hub.

The first surface 12 has a plurality of indentations or dimples 24 formed therein. The indentations 24 are spaced around the braking surface of the rotor 10. Preferably, the indentations 24 are formed as concave depressions in the braking surfaces 12, 14. The indentations 24, seen in FIG. 3A, are partially spherical, but may be made in any shape, including but not limited to an oval, arc, wedge, square or rectangular shape. The indentations 24 may also be made in any size, both larger and smaller than shown. Each indentation 24 on a single disk 10 may have the same shape and size or may vary in shape and/or size across the surface of the disk 10.

The indentations 24 may be formed by cutting into the braking surface 12, 14. In a preferred embodiment, the brake rotor 10 is formed of cast iron with or without an alloy, and the indentations 24 are cut into the surface 12, 14 with a chamfer tool, for example. The depth of the indentation 24 is determined by the wear of the particular rotor 10, but is preferably shallow. For example, in one embodiment, the depth of the indentation 24 may be approximately 1.0 - 1.5 mm. In any event, the indentations 24 do not extend all the way through the braking surface 12, 14. It is also possible to form the indentations 24 by other techniques, including embossing.

The indentations 24 may be arranged in groups extending radially outward from the inner circumference to the outer circumference of the braking surface 12, as seen in Figs. 1 and 2. Each group 26 includes a series of indentations 24 in alignment. The groups 26 are circumferentially and radially offset from an adjacent group. In the embodiment seen in FIGS. 1-3, each group 26 includes three indentations 24, and three repeating groups 26 extend from the inner circumference to the outer circumference. Of course, any number of indentations and groups may be used. Preferably, the indentations 24 do not extend into the inner circumference or the outer circumference.

As seen in detail in FIG. 2, each group 26 of indentations 24 is located on the surface 12 positioned between the vanes 16. This positioning promotes uniform temperature distribution across the surface 12. It is also possible to position the indentations 24 over the vanes 16 or at positions unrelated to the location of the vanes 16. The second surface 14 can also have similar groups 26 of indentations 24 formed therein. The indentations 24 on the second surface 14 may be aligned with the indentations 24 on the first surface 12 or may be offset with respect to the first surface 12.

Using a series of indentations 24 in a predetermined pattern reduces the discontinuity between the braking surface 12, 14 and the brake pad. Friction is increased due to the indentations 24. However, noise generated by the brake pad contacting the discontinuous surface of the braking surfaces 12, 14 is minimized because less disturbance is created by the short bursts of discontinuity. For example, slots formed in the surface of a rotor can create a large disturbance thus generating excessive groaning or noise upon the application of the brake pads. With the dimpled design, the noise is not significantly increased compared to a smooth disk.

Also, the indentations 24 provide more uniform temperature distribution across the brake pad contact surfaces 12, 14, which leads to less thermal stress, less thermal distortion, and a longer disk life. Thus, the brake rotor 10 in accordance with this invention provides increased braking power due to the friction created by the indentations 24, while achieving an even temperature distribution providing a more durable disk and low noise during braking.

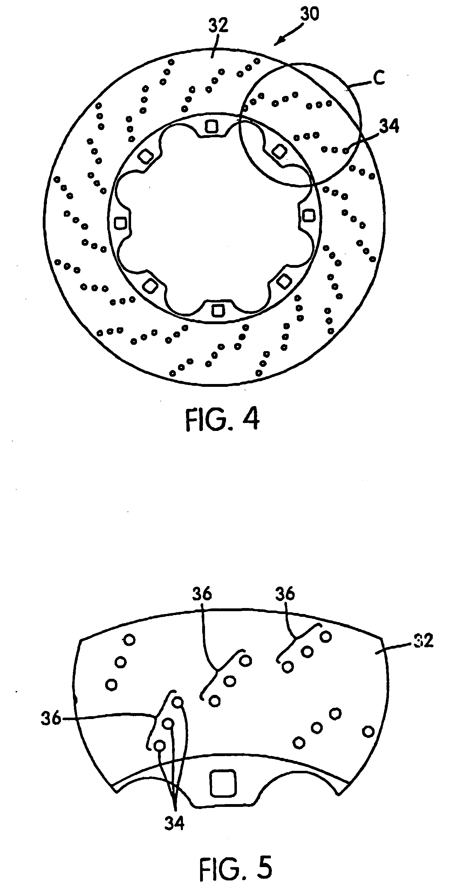

Figs. 4 and 5 show an example of another brake rotor 30. The brake rotor 30 is a single disk with a braking surface 32. Preferably, a braking surface is also disposed on the opposite side (not shown in FIG. 4). A series of indentations 34 are formed in the surface 32 in a similar manner as described with respect to the embodiment of FIG. 1. As seen in detail in FIG. 5, the indentations 34 are arranged in groups 36 radially spaced between the inner circumference and the outer circumference. Three groups 36 each having three indentations 34 are shown, but any number of groups and indentations may be used. Similar to the embodiment above, the braking surface on the opposed side of the rotor 30 can have groups of indentations as well.

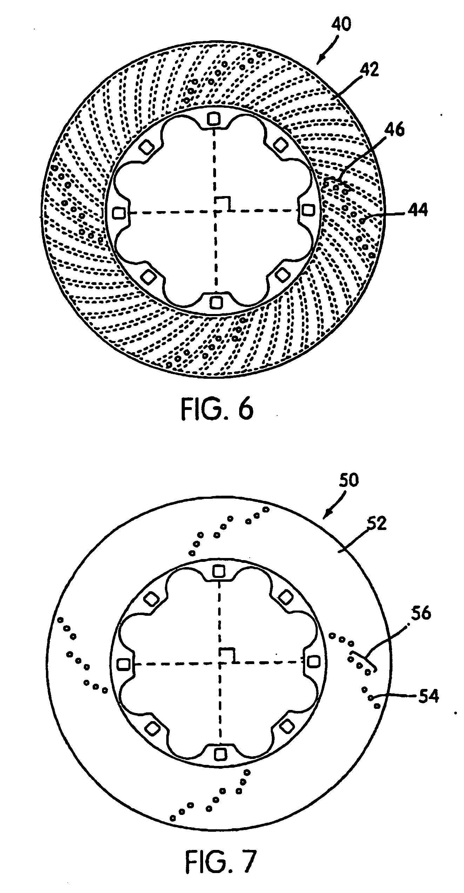

FIG. 6 shows a ventilated brake rotor 40 having a braking surface 42 with a different arrangement of indentations 44 in sets of three groups 46, each set being separated from an adjacent set by approximately 90 degrees. This arrangement provides an enhanced friction surface while reducing the stress concentrations, accommodating heating and providing an acceptable noise characteristic. The groups 46 may be arranged at any position relative to another, for example with more groups separated by less than 90 degrees or less groups separated by more than 90 degrees.

FIG. 7 shows a brake rotor 50 having a similar arrangement of indentations as seen in FIG. 6, but formed on a single, non-ventilated disk. Rotor 50 has a braking surface 52 with a series of indentations 54 arranged in four sets of groups 56 disposed at approximately 90 degrees from each other. Again, the opposed surface is preferably a braking surface with indentations as well.

FIG. 8 illustrates a modification of a rotor 60 in accordance with the invention having a pattern with a series of two radially spaced groups 66 of two indentations 64 disposed between straight ventilation vanes 68.

FIG. 8A illustrates a rotor 61 similar to the rotor of FIG. 8 having straight ventilation vanes 63 with three indentations 65 in each group 67 of indentations.

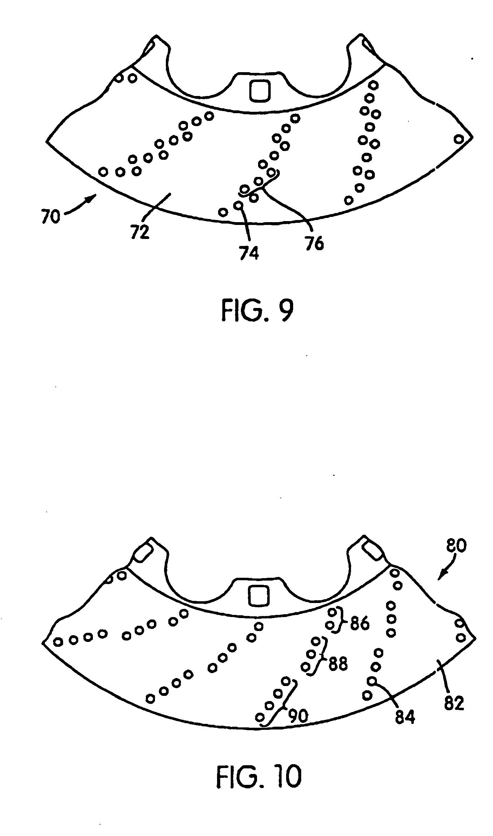

FIG. 9 illustrates a rotor 70 having a braking surface 72 with indentations 74 arranged in four groups 76 radially offset from each other. Each group in this case includes three indentations 74.

FIG. 10 illustrates a rotor 80 having a braking surface 82 with indentations 84 arranged in groups 86, 88, and 90, each group having a different number of indentations 84. The groups may be positioned at any location across the rotor surface 82. In this example, group 86 includes two aligned indentations 84, group 88 includes three aligned indentations 84, and group 90 includes four aligned indentations 84.

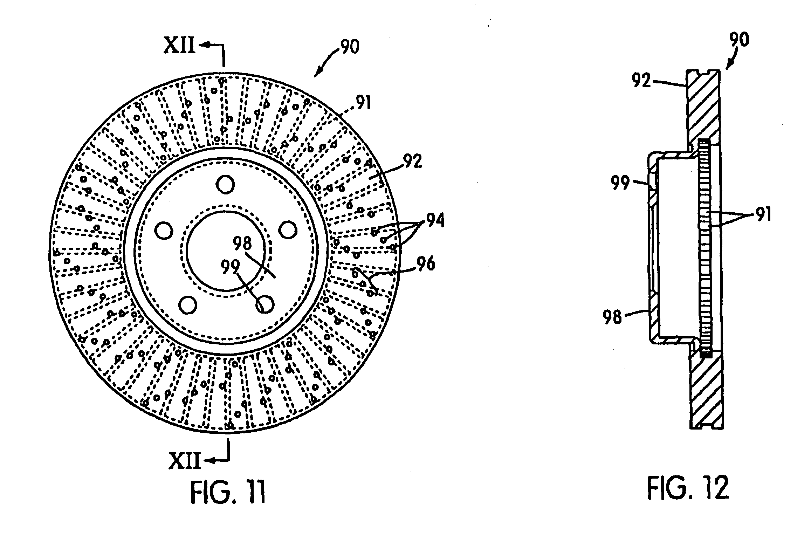

FIG. 11 illustrates an integral hat and hub type rotor 90 with straight ventilation vanes 91. The rotor 90 has a braking surface 92 with indentations 94 arranged in groups 96. The connection flange 98 is configured as a raised hat shape with hub fastener apertures 99, as seen in FIG. 12. In this embodiment, the indentations 94 are arranged in groups 96 of three indentations, with three groups spanning the width of the braking surface 92. However, as with each embodiment, any number of indentations or groups may be used.

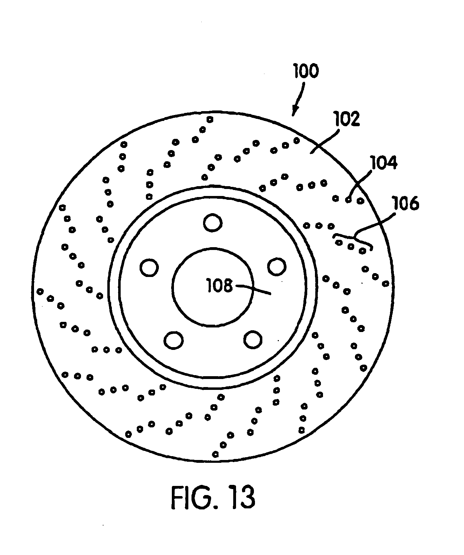

FIG. 13 illustrates an integral hat and hub type rotor 100 with no ventilation vanes, in other words, a flat or single disk type rotor, having a braking surface 102 with a plurality of indentations 104 arranged in groups 106. An integral hat and hub attachment portion 98 is provided, similar to the portion shown in FIG. 12.

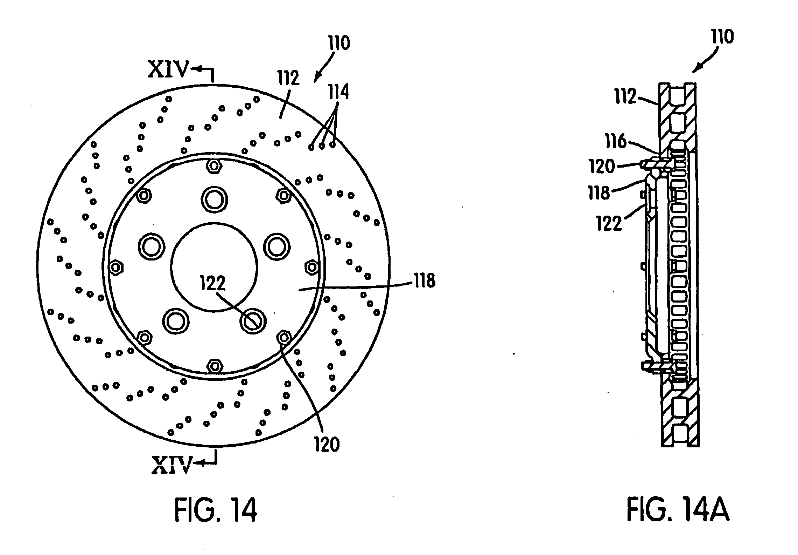

FIG. 14 shows a rotor 110 having a braking surface 112 with indentations 114. The rotor 110 has an attachment portion 116 that is fastened to a hat 118 with fasteners 120. The hat 118 has openings 122 for attachment to a hub. As seen in FIG. 14A, the rotor 110 may be ventilated.

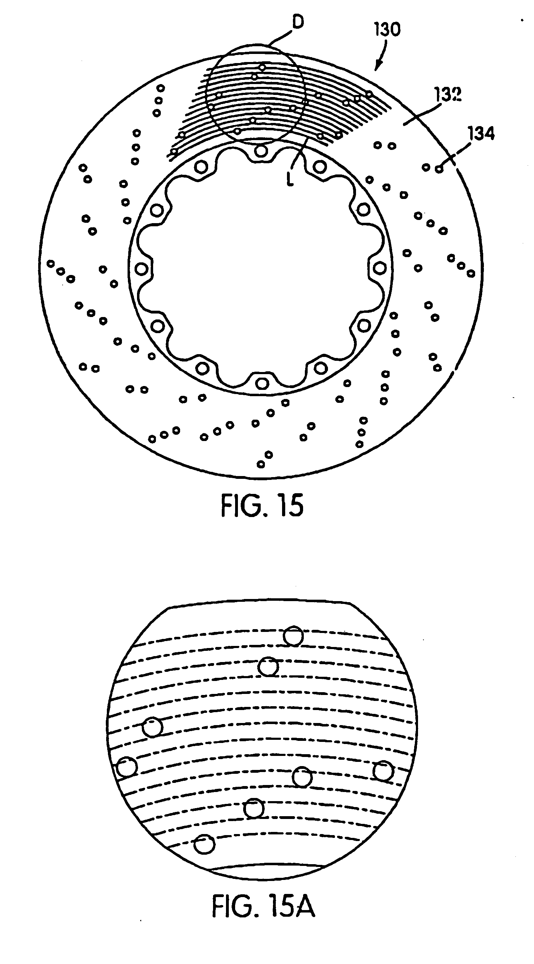

Fig. 15 shows a rotor 130 having a braking surface 132 with indentations 134 arrayed in a pattern that provides an indentation at each radial position between the inner circumference of the disk and the outer circumference of the disk. These positions are represented in FIG. 15 by lines L, which are imaginary lines to illustrate that the entire radial surface is occupied by an indentation 134. The indentations 134 can be positioned at immediately adjacent radial positions or at overlapping radial positions. As seen, the pattern includes a series of groups of three indentions 136 that alternate with a series of groups of two indentations 138. However, the precise grouping and arrangement can vary in this embodiment as long as each radial position is occupied by an indentation 134. Also, the rotor 130 can be a single disk or a ventilated disk and can attach any known way to the wheel hub.

This positioning allows the indentations 134 to provide a cleaning effect to the braking surface. As the brake pads press against the braking surface 132 while the rotor 130 is rotating, the friction material is scraped from the brake pads. This friction material can accumulate on the braking surface 132 and create a transfer layer of friction material on a smooth braking surface, especially when aggressive friction material is used as in high performance applications. The indentations 134, however, prevent the transfer layer from accumulating. However, when the indentations 134 are radially spaced, the transfer layer can build up in ridges in the areas between the indentations 134 and cause a rippled effect on the braking surface 132, which impairs rotor performance. A pattern that positions indentations 134 across the entire width of the braking surface 132 prevents such rippling.

Thus, it can be seen by the various embodiments described above that any type of rotor may be used with indentations, preferably arranged in a pattern, on a braking surface to enhance braking while minimizing negative effects of increased friction. While most embodiments shown in the attached figures illustrate only one surface for the sake of simplicity, it should be understood that most braking applications would include two surfaces on opposed sides of the rotor.

The various embodiments described above are intended to illustrate that in general any number of indentations in any arrangement of patterns or groups may be used. The precise number and arrangement are dependent on the particular design considerations of the vehicle intended to be used with the rotor.

While advantageous embodiments have been chosen to illustrate the invention, those skilled in the art will understand that various changes and modifications can be made therein without departing from the scope of the present invention.

## Claims

1. A rotor (10) comprising:
a disk (10) having a thickness and at least one brake pad contact surface (12,14) bounded by an inner circumference and an outer circumference, the at least one brake pad contact surface (12,14) including a plurality of indentations (24) formed therein in an area between the inner circumference and the outer circumference, wherein the indentations (24) are concave dimples having a depth less than the thickness of the disk (10) and are arranged in a repeating pattern; and
an attachment portion (20) extending from the disk (10) for attachment to a wheel,
wherein the repeating pattern of indentations (24) is formed of a plurality of groups (26) of indentations (24) extending generally in the same direction between the inner circumference and the outer circumference, wherein each group (26) of indentations is formed of aligned indentations (24) with the indentation closest to the inner circumference and the indentation closest to the outer circumference and any indentations aligned therebetween defining the group (26); **characterised in that**
each entire group (26) of indentations (24) is radially and circumferentially offset from an entire adjacent group (26) such that the outermost indentation (24) of an entire first group (26) of indentations located closer to the inner circumference, is positioned closer to the inner circumference than the innermost indentation (24) of an entire adjacent second group (26) of indentations located closer to the outer circumference.

2. A rotor according to claim 1, wherein the pattern includes a first set of groups (26) of indentations (24) extending from within the inner circumference toward the outer circumference and a second set of groups (26) of indentations (24) extending from within the inner circumference toward the outer circumference, wherein the first set of groups (26) is circumferentially spaced from the second set of groups (26) by about 90 degrees and wherein the space on the brake pad surface (12,14) between the sets of groups (26) is not indented.

3. A rotor according to claim 1, wherein the pattern includes a determined number n of sets of groups (26) distributed evenly on the brake pad contact surface (12,14) of the disk (10), such that each set is separated by an adjacent set by 360 degrees divided by n.

4. A rotor according to any of claim 1 to 3, wherein each group includes at least two indentations (24).

5. A rotor according to any of claims 1 to 4, wherein the disk (10) is annular and the attachment portion (20) extends inwardly from the disk (10) and includes a plurality of fastener holes (22).

6. A rotor according to any of claims 1 to 5, wherein the indentations (24) are positioned such that the area of the brake pad contact surface (12) covered by indentations (24) includes all radial positions between the inner circumference and the outer circumference.

7. A rotor according to any of claims 1 to 6, comprising a wheel hub fastened to the attachment portion (20) and a hat fastened to the attachment portion (20).

8. A rotor according to any of claims 1 to 7, comprising a second disk having a thickness and a brake pad contact surface (14) and a plurality of spaced vanes (16) disposed between the disks creating a ventilated rotor.

9. A rotor according to claim 8, wherein the vanes (16) are curved and the indentations (24) are arranged in arcuate lines or are straight.

10. A rotor according to claim 8 or claim 9, wherein the indentations (24) are disposed on the brake pad contact surfaces (12,14) in positions between the vanes (16).

11. A rotor according to any of claims 1 to 10, wherein the rotor (10) is a hat type rotor or a hub type rotor.

12. A wheel of a road vehicle combined with a rotor according to any of claims 1 to 11.

## Patentansprüche

1. Rotor (10), welcher aufweist:
eine Scheibe (10) mit einer Dicke und mindestens einer durch einen Innenumfang und einen Außenumfang begrenzten Bremsklotz-Kontaktfläche (12, 14), wobei die mindestens eine Bremsklotz-Kontaktfläche (12, 14) eine Mehrzahl von in einem Bereich zwischen dem Innenumfang und dem Außenumfang gebildeten Einbuchtungen (24) umfasst, wobei die Einbuchtungen (24) konkave Vertiefungen sind, deren Tiefe geringer ist als die Dicke der Scheibe (10), und in einem sich wiederholenden Muster angeordnet sind; und
einen sich von der Scheibe (10) erstreckenden Befestigungsabschnitt (20) zum Befestigen an einem Rad, wobei das sich wiederholende Muster der Einbuchtungen (24) aus einer Mehrzahl von Gruppen (26) von Einbuchtungen (24) gebildet ist, die sich im allgemeinen in dieselbe Richtung zwischen dem Innenumfang und dem Außenumfang erstrecken, wobei jede Gruppe (26) von Einbuchtungen aus fluchtenden Einbuchtungen (24) gebildet ist, wobei die Einbuchtungen, die dem Innenumfang am nächsten sind und die Einbuchtungen, die dem Außenumfang am nächsten sind und jegliche dazwischen fluchtenden Einbuchtungen die Gruppe (26) definieren;
**dadurch gekennzeichnet, dass** jede gesamte Gruppe (26) von Einbuchtungen (24) radial und in Umfangsrichtung von einer gesamten benachbarten Gruppe (26) versetzt ist, so dass die äußerste Einbuchtung (24) einer gesamten ersten Gruppe (26) von Einbuchtungen, die näher zu dem Innenumfang angeordnet sind, näher zu dem Innenumfang angeordnet ist als die innerste Einbuchtung (24) einer gesamten benachbarten zweiten Gruppe (26) von Einbuchtungen, die näher zu dem Außenumfang angeordnet sind.

2. Rotor nach Anspruch 1, wobei das Muster einen ersten Satz von Gruppen (26) von Einbuchtungen (24), die sich von innerhalb des Innenumfangs in Richtung des Außenumfangs erstrecken, und einen zweiten Satz von Gruppen (26) von Einbuchtungen (24) umfasst, die sich von innerhalb des Innenumfangs in Richtung des Außenumfangs erstrecken, wobei der erste Satz von Gruppen (26) in Umfangsrichtung von dem zweiten Satz von Gruppen (26) um ca. 90° beabstandet ist, und wobei der Zwischenraum auf der Bremsklotzfläche (12, 14) zwischen den Sätzen von Gruppen (26) keine Einbuchtung hat.

3. Rotor nach Anspruch 1, wobei das Muster eine vorbestimmte Anzahl n von Sätzen von Gruppen (26) umfasst, die gleichmäßig auf der Bremsklotz-Kontaktfläche (12, 14) der Scheibe (10) verteilt sind, so dass jeder Satz von einem benachbarten Satz um 360° geteilt durch n beabstandet ist.

4. Rotor nach einem der Ansprüche 1 bis 3, wobei jede Gruppe mindestens zwei Einbuchtungen (24) umfasst.

5. Rotor nach einem der Ansprüche 1 bis 4, wobei die Scheibe (10) ringförmig ist und der Befestigungsabschnitt (20) sich nach innen von der Scheibe (10) erstreckt und eine Mehrzahl von Befestigungslöchern (22) umfasst.

6. Rotor nach einem der Ansprüche 1 bis 5, wobei die Einbuchtungen (24) so angeordnet sind, dass der mit Einbuchtungen (24) versehene Bereich der Bremsklotz-Kontaktfläche (12) alle radialen Positionen zwischen dem Innenumfang und dem Außenumfang umfasst.

7. Rotor nach einem der Ansprüche 1 bis 6, welcher eine Radnabe, die mit dem Befestigungsabschnitt (20) befestigt ist, und einen Rand, der mit dem Befestigungsabschnitt (20) befestigt ist, aufweist.

8. Rotor nach einem der Ansprüche 1 bis 7, welcher eine zweite Scheibe mit einer Dicke und eine Bremsklotz-Kontaktfläche (14) sowie eine Mehrzahl von voneinander beanstandeten Luftblechen (16) aufweist, die zwischen den Scheiben angeordnet sind und einen Lüftungsrotor erzeugen.

9. Rotor nach Anspruch 8, wobei die Luftbleche (16) gekrümmt sind und die Einbuchtungen (24) in gebogenen Linien oder gerade angeordnet sind.

10. Rotor nach Anspruch 8 oder 9, wobei die Einbuchtungen (24) auf den Bremsklotz-Kontaktflächen (12, 14) an Positionen zwischen den Luftblechen (16) angeordnet sind.

11. Rotor nach einem der Ansprüche 1 bis 10, wobei der Rotor (10) ein randartiger Rotor oder ein nabenartiger Rotor ist.

12. Rad eines Straßenfahrzeugs in Kombination mit einem Rotor nach einem der Ansprüche 1 bis 11.

## Revendications

1. Rotor (10) comprenant :
un disque (10) ayant une épaisseur et au moins une surface de contact de plaquette de frein (12, 14) bornée par une circonférence intérieure et une circonférence extérieure, l'au moins une surface de contact de plaquette de frein (12, 14) comprenant une pluralité d'encoches (24) formées dans celle-ci dans une zone entre la circonférence intérieure et la circonférence extérieure, dans lequel les encoches (24) sont des dépressions concaves ayant une profondeur inférieure à l'épaisseur du disque (10) et sont agencées dans une configuration répétée ; et
une partie de fixation (20) s'étendant à partir du disque (10) pour la fixation à une roue,
dans lequel la configuration répétée d'encoches (24) est formée d'une pluralité de groupes (26) d'encoches (24) s'étendant généralement dans la même direction entre la circonférence intérieure et la circonférence extérieure, dans lequel chaque groupe (26) d'encoches est formé d'encoches alignées (24) avec l'encoche la plus proche de la circonférence intérieure et l'encoche la plus proche de la circonférence extérieure et toutes encoches alignées entre celles-ci définissant le groupe (26) ;
**caractérisé en ce que**
chaque groupe entier (26) d'encoches (24) est décalé de façon radiale et de façon circonférentielle par rapport à un groupe adjacent entier (26) de sorte que l'encoche la plus extérieure (24) d'un premier groupe entier (26) d'encoches situé plus près de la circonférence intérieure est positionnée plus près de la circonférence intérieure que l'encoche la plus intérieure (24) d'un second groupe adjacent entier (26) d'encoches situé plus près de la circonférence extérieure.

2. Rotor selon la revendication 1, dans lequel la configuration comprend un premier jeu de groupes (26) d'encoches (24) s'étendant à partir de l'intérieur de la circonférence intérieure vers la circonférence extérieure et un second jeu de groupes (26) d'encoches (24) s'étendant à partir de l'intérieur de la circonférence intérieure vers la circonférence extérieure, dans lequel le premier jeu de groupes (26) est espacé de façon circonférentielle du second jeu de groupes (26) d'environ 90 degrés et dans lequel l'espace sur la surface de plaquette de frein (12, 14) entre les jeux de groupes (26) n'est pas encoché.

3. Rotor selon la revendication 1, dans lequel la configuration comprend un nombre déterminé n de jeux de groupes (26) distribués uniformément sur la surface de contact de plaquette de frein (12, 14) du disque (10), de sorte que chaque jeu est séparé par un jeu adjacent de 360 degrés divisés par n.

4. Rotor selon l'une quelconque des revendications 1 à 3, dans lequel chaque groupe comprend au moins deux encoches (24).

5. Rotor selon l'une quelconque des revendications 1 à 4, dans lequel le disque (10) est annulaire et la partie de fixation (20) s'étend vers l'intérieur à partir du disque (10) et comprend une pluralité de trous de fixation (22).

6. Rotor selon l'une quelconque des revendications 1 à 5, dans lequel les encoches (24) sont positionnées de sorte que la superficie de la surface de contact de plaquette de frein (12) recouverte par des encoches (24) comprend toutes les positions radiales entre la circonférence intérieure et la circonférence extérieure.

7. Rotor selon l'une quelconque des revendications 1 à 6, comprenant un moyeu de roue fixé à la partie de fixation (20) et un chapeau fixé à la partie de fixation (20).

8. Rotor selon l'une quelconque des revendications 1 à 7, comprenant un second disque ayant une épaisseur et une surface de contact de plaquette de frein (14) et une pluralité d'aubes espacées (16) disposées entre les disques créant un rotor ventilé.

9. Rotor selon la revendication 8, dans lequel les aubes (16) sont courbées et les encoches (24) sont agencées dans des lignes arquées ou sont droites.

10. Rotor selon la revendication 8 ou la revendication 9, dans lequel les encoches (24) sont disposées sur la surface de contact de plaquette de freins (12, 14) dans des positions entre les aubes (16).

11. Rotor selon l'une quelconque des revendications 1 à 10, dans lequel le rotor (10) est un rotor de type chapeau ou un rotor de type moyeu.

12. Roue d'un véhicule de route associé à un rotor selon l'une quelconque des revendications 1 à 11.
